# EUROPÄISCHE PATENTANMELDUNG

(11) **EP 2 851 145 A1**
(43) Veröffentlichungstag der Anmeldung: **25.03.2015**
(21) Anmeldenummer: 13184904.4
(22) Anmeldetag: 18.09.2013
(51) Int. Cl.: B22F 3/105, B29C 67/00

(54) **Vorrichtung zum schichtweisen Generieren von Bauteilen durch ein generatives Fertigungsverfahren, ein Verfahren sowie ein Bauteil**

(71) Anmelder: Siemens Aktiengesellschaft, 80333 München (DE)
(72) Erfinder: Arjakine, Nikolai, 10555 Berlin (DE); Burbaum, Bernd, 14612 Falkensee (DE); Geisen, Ole, 10781 Berlin (DE); Kreutzer, Andreas, 10367 Berlin - Lichtenberg (DE); Laux, Britta, 14059 Berlin (DE); Neddemeyer, Torsten, 14532 Kleinmachnow (DE); Piegert, Sebastian, 10777 Berlin (DE)

(57) **Zusammenfassung**

Die Erfindung betrifft eine Vorrichtung zum schichtweisen Generieren von Bauteilen durch ein generatives Fertigungsverfahren, umfassend eine Bauteilplattform (1) für das zu generierende Bauteil, eine Pulverschicht (7), eine Pulverauftragsvorrichtung (8) zum Generieren einer Bauteilschicht durch Auftragen der Pulverschicht (7) oberhalb der Bauteilplattform (1), sowie einen Verfestiger zum Verfestigen wenigstens eines Teils der aufgetragenen Pulverschicht (7) anhand eines Belichtungsfiles, wobei ein Ultraschallgeber (10) vorgesehen ist, welcher Ultraschall zumindest in die zu verfestigende Pulverschicht (7) einkoppelt.

## Beschreibung

Die Erfindung betrifft eine Vorrichtung zum schichtweisen Generieren von Bauteilen durch ein generatives Fertigungsverfahren, umfassend eine Bauteilplattform für das zu generierende Bauteil, eine Pulverschicht, eine Pulverauftragsvorrichtung zum Generieren einer Bauteilschicht durch Auftragen der Pulverschicht oberhalb der Bauteilplattform, sowie einen Verfestiger zum Verfestigen wenigstens eines Teil der aufgetragenen Pulverschicht anhand eines Belichtungsfiles. Weiterhin betrifft die Erfindung ein Verfahren sowie ein Bauteil, welches mit dem Verfahren herstellbar ist.

Generative Fertigungsverfahren werden durch ihr iteratives Auf- oder Aneinanderfügen von Schicht- oder Volumenelementen zur Herstellung dreidimensionaler Gegenstände eingesetzt, und finden ihre Anwendung im Bereich der Herstellung von Prototypen sowie inzwischen auch in der Bauteilherstellung, insbesondere bei der Anfertigung individuell geformter Bauteile. Als Ausgangsmaterialien stehen eine Vielzahl unterschiedlicher Werkstoffe zur Verfügung, die sowohl in Pulver- oder Granulatform, aber auch in Form von Fluiden bspw. als Suspensionen, vorliegen können. Bei generativen Herstellungsverfahren, wird der dreidimensionale Gegenstand durch eine Vielzahl einzelner Materialschichten, die auf einer absenkbaren Bauteilplattform nacheinander abgeschieden und anschließend einzeln einem lokal selektiven Verfestigungsprozess unterzogen werden, gebildet.

Zur Darstellung eines Bauteiles mittels Selektivem Laser(strahl)schmelzen (SLM) wird ein Pulverbett mittels eines Laserstrahles gemäß einem vorgegebenen Belichtungsfile belichtet, bei dem die Daten aus einem 3D-CAD-File erzeugt werden. Im ersten Berechnungsschritt wird das Bauteil in einzelne Schichten unterteilt. Im zweiten Berechnungsschritt werden für jede Schicht die Bahnen (Vektoren) erzeugt, die der Laserstrahl abfährt.

Ist eine Pulverschicht belichtet, so wird die Bauteilplattform abgesenkt und eine neue Schicht Pulver mittels eines Schiebers, beispielsweise eines Rechens aufgebracht und dann erneut mit dem Laser und mithilfe des Belichtungsfiles belichtet.

Beim selektiven Laserstrahlschmelzen ergibt sich eine Anisotropie des Gefüges und damit der mechanischen Eigenschaften. Die Körner wachsen in Richtung des maximalen Temperaturgradienten, das bedeutet hier in Richtung der Laserstrahlung. Für viele Anwendungen ist diese Richtungsabhängigkeit der mechanischen Eigenschaften nicht gewünscht.

Eine erste Aufgabe der Erfindung ist die Angabe einer Vorrichtung zum schichtweisen Generieren von Bauteilen durch ein generatives Fertigungsverfahren, welches das oben genannte Problem löst. Weiterhin liegt der Erfindung die zweite Aufgabe zugrunde, ein Verfahren zum schichtweisen Generieren von Bauteilen durch ein generatives Fertigungsverfahren anzugeben, welches das oben genannte Problem löst. Die dritte Aufgabe liegt in der Angabe eines Bauteils, welches mit dem Verfahren herstellbar ist.

Die erste Aufgabe wird gelöst durch die Angabe einer Vorrichtung zum schichtweisen Generieren von Bauteilen durch ein generatives Fertigungsverfahren, umfassend eine Bauteilplattform für das zu generierende Bauteil, eine Pulverschicht, eine Pulverauftragsvorrichtung zum Generieren einer neuen Bauteilschicht durch Auftragen der Pulverschicht oberhalb der Bauteilplattform, sowie einen Verfestiger zum Verfestigen wenigstens eines Teil der aufgetragenen Pulverschicht anhand eines Belichtungsfiles, wobei ein Ultraschallgeber vorgesehen ist, welcher Ultraschall zumindest in die zu verfestigende Pulverschicht einkoppelt.

Durch einen Ultraschallgeber wird Ultraschall zumindest in die zu verfestigende Pulverschicht eingekoppelt. Durch den Ultraschall brechen während des Erstarrungsvorgangs bzw. Verfestigungsvorgangs die Dendritenspitzen ab und werden zu Kristallisationskeimen in der zu verfestigenden Pulverschicht, hier insbesondere eine Schmelze. Dadurch bilden sich neue Körner in der zu verfestigenden Pulverschicht und das Gefüge wird feinkörniger und damit richtungsunabhängig, d.h. isotrop. Dadurch verbessern sich die mechanischen Eigenschaften des fertig generierten Bauteils.

Bevorzugt ist der Ultraschall zudem in die unter der zu verfestigenden Pulverschicht liegende Schicht einkoppelbar. Dies fördert das isotrope Körnerwachstum in der aufwachsenden Schicht.

In einer bevorzugten Ausgestaltung ist der Ultraschall zudem in das zu generierende Bauteil einkoppelbar, wodurch eine gesicherte Ultraschalleinkopplung sichergestellt wird.

Bevorzugt ist der Ultraschallgeber an der Bauteilplattform angebracht. In einer besonders bevorzugten Ausgestaltung ist der Ultraschallgeber zumindest teilweise unterhalb der Bauteilplattform angebracht. Dies ermöglicht ein besonders einfaches Anbringen und die Sicherstellung von einer ununterbrochenen Ultraschalleinkopplung. Bevorzugt ist die Bauteilplattform mit dem Ultraschallgeber absenkbar. Dadurch lässt sich die Vorrichtung besonders einfach bedienen. Bevorzugt ist der Ultraschallgeber in die Bauteilplattform eingebettet, d.h. integriert. Dadurch bleibt der benötigte Bauraum gleich.

Bevorzugt ist der Ultraschallgeber eine Piezokeramik. Es sind aber auch noch andere Ultraschallgeber vorstellbar.

Bevorzugt sind zumindest die Bauteilplattform und die Pulverauftragsvorrichtung in einer Prozesskammer angeordnet. Auch kann zudem der Verfestiger in der Prozesskammer angeordnet sein. Dies gewährleistet einen sicheren Betrieb, vor allem wenn der Verfestiger ein Laser ist. Zudem kann in die Prozesskammer auch ein Prozessgas oder ähnliches eingebracht werden, welches die Verfestigung beschleunigt.

In besonderer Ausgestaltung ist der Verfestiger ein Laser und das Pulver wird durch einen hochenergetischen Laserstrahl verfestigt. Dabei wird der Laser, insbesondere im Rahmen des selektiven Laserstrahlschmelzens oder des selektiven Lasersinterns eingesetzt. Die zu verfestigende Pulverschicht wird dann geschmolzen, und ist daher eine Schmelze, die anschließend erstarrt.

Die zweite Aufgabe wird gelöst durch die Angabe eines Verfahrens zum schichtweisen Generieren von Bauteilen durch ein generatives Fertigungsverfahren bei dem eine Bauteilplattform für das zu generierende Bauteil bereitgestellt wird, sowie eine Pulverschicht, welche oberhalb der Bauteilplattform durch eine Pulverauftragsvorrichtung zum Generieren einer Bauteilschicht aufgetragen wird, und wobei wenigstens ein Teil der aufgetragenen Pulverschicht anhand eines Belichtungsfiles verfestigt wird, wobei durch einen Ultraschallgeber Ultraschall zumindest in die zu verfestigende Pulverschicht eingekoppelt wird.

Die Vorteile der Vorrichtung können auch auf das Verfahren übertragen werden: Durch den Ultraschall brechen während des Erstarrungsvorgangs bzw. Verfestigungsvorgangs die Dendritenspitzen ab und werden zu Kristallisationskeimen in der zu verfestigenden Pulverschicht, hier insbesondere eine Schmelze. Dadurch bilden sich neue Körner in der zu verfestigenden Pulverschicht und das Gefüge des herzustellenden Bauteils wird feinkörniger und damit richtungsunabhängig. Das fertige Bauteil weist somit ein isotropes Gefüge auf. Dadurch verbessern sich die mechanischen Eigenschaften im Vergleich zu den Eigenschaften des Bauteils des Stands der Technik, welches ein anisotropes Gefüge aufweist.

Bevorzugt wird der Ultraschall zumindest während der Verfestigung eingekoppelt. Alternativ kann der Ultraschall während des gesamten Fertigungsverfahrens in das zu verfestigende Pulver eingekoppelt werden. Dies vereinfacht den Fertigungsprozess.

Bevorzugt wird der Ultraschall in das gesamte aufgetragene Pulver eingekoppelt. Auch hier wird dadurch der Fertigungsprozess vereinfacht.

Bevorzugt wird als generatives Verfahren das Selektive Laserstrahlschmelzen angewandt. Auch können jedoch andere generative Fertigungsverfahren, bei denen das Bauteil schichtweise aufgebaut wird, in Betracht gezogen werden.

Bevorzugt wird das Verfestigen durch einen hochenergetischen Laserstrahl durchgeführt.

Die dritte Aufgabe wird gelöst durch die Angabe eines Bauteils hergestellt nach dem oben beschriebenen Verfahren, wobei das Bauteil strahlgeschmolzen ist und ein richtungsunabhängiges Gefüge aufweist. Dabei eignet sich ein solches Bauteil vor allem zum Einsatz in einem Kraftwerk, insbesondere als hochtemperaturbelastetes Bauteil, wie z.B. eine Schaufel. Das gefertigte Bauteil weist ein isotropes Gefüge auf.

Bevorzugt wird das Bauteil mit einer wie oben beschriebenen Vorrichtung hergestellt.

Weitere Merkmale, Eigenschaften und Vorteile der vorliegenden Erfindung ergeben sich aus der nachfolgenden Beschreibung unter Bezugnahme auf die beiliegenden Figuren. Darin zeigen schematisch:
- FIG 1:: schematisch die erfindungsgemäße Vorrichtung,
- FIG 2:: schematisch das Verfahren.

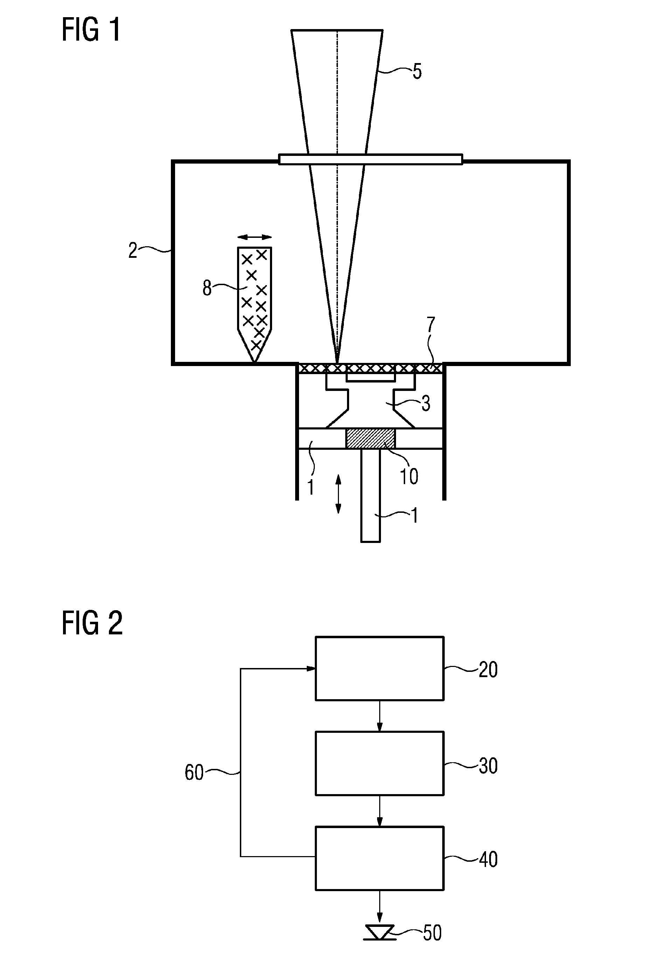

FIG 1 zeigt schematisch die erfindungsgemäße Vorrichtung zum schichtweisen Generieren von Bauteilen. Dabei weist die erfindungsgemäße Vorrichtung eine Bauteilplattform 1 auf. Diese kann in einer Prozesskammer 2 angeordnet sein. Die Bauteilplattform 1 kann verschiebbar bzw. absenkbar sein. Durch eine Pulverauftragsvorrichtung 8 wird nun eine Pulverschicht 7 auf die Bauteilplattform 1 aufgetragen. Dabei kann auf der Bauteilplattform 1 auch das halbfertige zu generierende Bauteil angeordnet sein. In diesem Fall wird die Pulverschicht 7 zumindest auf das halbfertige Bauteil, welches auf der abgesenkten Bauteilplattform 1 angeordnet ist, aufgetragen. Zudem umfasst die Vorrichtung als Verfestiger einen Laser 5, welcher auch außerhalb der Prozesskammer 2 angeordnet sein kann. Der Laser 5 schmilzt nun lokal das Pulver auf, welches sich anschließend verfestigt und sich mit der darunter liegenden Schicht verbindet. Zudem umfasst die Vorrichtung noch einen Ultraschallgeber 10. Dieser kann beispielsweise eine Piezokeramik sein. Der Ultraschallgeber 10 ist bevorzugt unterhalb der Bauteilplattform 1 angeordnet. Auch kann der Ultraschallgeber 10 in die Bauteilplattform 1 eingebettet sein. Durch den Ultraschallgeber 10 wird Ultraschall in die aufgetragene und zu verfestigende Pulverschicht 7 und in das halbfertige Bauteil 3 eingekoppelt. Durch den Ultraschall brechen während des Erstarrungsvorgangs bzw. Verfestigungsvorgang die Dendritenspitzen ab und werden zu Kristallisationskeimen in der Schmelze. Dadurch bilden sich neue Körner in der Schmelze und das Gefüge des herzustellenden Bauteils wird feinkörniger und damit richtungsunabhängig. Das fertige Bauteil weist somit ein isotropes Gefüge auf. Dadurch verbessern sich die mechanischen Eigenschaften im Vergleich zu den Eigenschaften des Bauteils des Standes der Technik, welches ein anisotropes Gefüge aufweist.

FIG 2 zeigt schematisch das erfindungsgemäße Verfahren auf. Dabei wird zunächst eine Bauteilplattform 1 (FIG 1) für das zu generierende Bauteil bereitgestellt 20. Anschließend wird eine neue Pulverschicht 7 (FIG 1) auf die Bauteilplattform 1 (FIG 1) bzw. auf die vorangegangenen verfestigten und nicht verfestigten Pulverschichten aufgetragen (Pulverbett) 30. Dabei kann die Pulverschicht 7 (FIG 1) durch eine Pulverauftragsvorrichtung 8 (FIG 1) aufgetragen werden. Anschließend wird die aufgetragene Pulverschicht 7 (FIG 1) lokal anhand eines Belichtungsfiles und unter Ultraschall verfestigt 40. Das Verfahren endet wenn das Bauteil schichtweise vollständig aufgebaut ist 50. Ansonsten startet das Verfahren erneut 60.

## Patentansprüche

1. Vorrichtung zum schichtweisen Generieren von Bauteilen durch ein generatives Fertigungsverfahren, umfassend eine Bauteilplattform (1) für das zu generierende Bauteil, eine Pulverschicht (7), eine Pulverauftragsvorrichtung (8) zum Generieren einer Bauteilschicht durch Auftragen der Pulverschicht (7) oberhalb der Bauteilplattform (1), sowie einen Verfestiger zum Verfestigen wenigstens eines Teil der aufgetragenen Pulverschicht (7) anhand eines Belichtungsfiles,
**dadurch gekennzeichnet, dass** ein Ultraschallgeber (10) vorgesehen ist, welcher Ultraschall zumindest in die zu verfestigende Pulverschicht (7) einkoppelt.

2. Vorrichtung nach Anspruch 1,
**dadurch gekennzeichnet, dass** der Ultraschall zudem in die unter der zu verfestigenden Pulverschicht (7) liegende Schicht einkoppelbar ist.

3. Vorrichtung nach einem der vorhergehenden Ansprüche,
**dadurch gekennzeichnet, dass** der Ultraschall zudem in das zu generierende Bauteil einkoppelbar ist.

4. Vorrichtung nach einem der vorhergehenden Ansprüche,
**dadurch gekennzeichnet, dass** der Ultraschallgeber (10) an der Bauteilplattform (1) angebracht ist.

5. Vorrichtung nach Anspruch 4,
**dadurch gekennzeichnet, dass** der Ultraschallgeber (10) zumindest teilweise unterhalb der Bauteilplattform (1) angebracht ist.

6. Vorrichtung nach einem der vorhergehenden Ansprüche 4 und 5,
**dadurch gekennzeichnet, dass** die Bauteilplattform (1) mit dem Ultraschallgeber (10) absenkbar ist.

7. Vorrichtung nach einem der vorhergehenden Ansprüche 4 - 6,
**dadurch gekennzeichnet, dass** der Ultraschallgeber (10) in die Bauteilplattform (1) eingebettet ist.

8. Vorrichtung nach einem der vorhergehenden Ansprüche,
**dadurch gekennzeichnet, dass** der Ultraschallgeber (10) eine Piezokeramik ist.

9. Vorrichtung nach einem der vorhergehenden Ansprüche,
**dadurch gekennzeichnet, dass** zumindest die Bauteilplattform (1) und die Pulverauftragsvorrichtung (8) in einer Prozesskammer (2) angeordnet sind.

10. Vorrichtung nach Anspruch 9,
**dadurch gekennzeichnet, dass** zudem der Verfestiger in der Prozesskammer (2) angeordnet ist.

11. Vorrichtung nach einem der vorhergehenden Ansprüche,
**dadurch gekennzeichnet, dass** der Verfestiger ein Laser (5) ist und das Pulver durch einen hochenergetischen Laserstrahl verfestigt wird.

12. Verfahren zum schichtweisen Generieren von Bauteilen durch ein generatives Fertigungsverfahren bei dem eine Bauteilplattform (1) für das zu generierende Bauteil bereitgestellt wird sowie eine Pulverschicht (7), welche oberhalb der Bauteilplattform (1) durch eine Pulverauftragsvorrichtung (8) zum Generieren einer Bauteilschicht aufgetragen wird, und wobei wenigstens ein Teil der aufgetragenen Pulverschicht (7) anhand eines Belichtungsfiles verfestigt wird,
**dadurch gekennzeichnet, dass** durch einen Ultraschallgeber (10) Ultraschall zumindest in die zu verfestigende Pulverschicht (7) eingekoppelt wird.

13. Verfahren nach Anspruch 12,
**dadurch gekennzeichnet, dass** der Ultraschall zumindest während der Verfestigung eingekoppelt wird.

14. Verfahren nach einem der vorhergehenden Ansprüche 12-13,
**dadurch gekennzeichnet, dass** der Ultraschall während des gesamten Fertigungsverfahrens in das zu verfestigende Pulver eingekoppelt wird.

15. Verfahren nach einem der vorhergehenden Ansprüche 12-13,
**dadurch gekennzeichnet, dass** der Ultraschall in das gesamte aufgetragene Pulver eingekoppelt wird.

16. Verfahren nach einem der vorhergehenden Ansprüche 12-14,
**dadurch gekennzeichnet, dass** als generatives Verfahren das selektive Laserstrahlschmelzen angewandt wird.

17. Verfahren nach einem der vorhergehenden Ansprüche 12-16,
**dadurch gekennzeichnet, dass** das Verfestigen durch einen hochenergetischen Laserstrahl durchgeführt wird.

18. Bauteil hergestellt nach einem Verfahren nach einem der Ansprüche 12-17,
**dadurch gekennzeichnet, dass** das Bauteil strahlgeschmolzen ist und ein richtungsunabhängiges Gefüge aufweist.

19. Bauteil nach Anspruch 18 hergestellt mit einer Vorrichtung nach einem der Ansprüche 1-11.
